# EUROPÄISCHE PATENTSCHRIFT

(11) **EP 0 644 230 B1**
(45) Veröffentlichungstag und Bekanntmachung des Hinweises auf die Patenterteilung: **22.07.1998**
(21) Anmeldenummer: 93118866.8
(22) Anmeldetag: 24.11.1993
(51) Int. Cl.: C08J 11/08

(54) **Verfahren zur Auf- bzw. Umarbeitung von Verbundmaterialien und Kunststoffen**
Process for treating or working up composite and plastic materials
Procédé pour le traitement ou de matériaux composites et de matières plastiques

(30) Priorität: 16.09.1993 DE 4331444
(43) Veröffentlichungstag der Anmeldung: 22.03.1995
(73) Patentinhaber: DSM N.V., 6411 TE Heerlen (NL)
(72) Erfinder: Thome, Roland, Dr., D-53117 Bonn (DE); Kraus, Sandra, D-53557 Bad Hönningen (DE); Schubert, Jürgen, D-53343 Wachtberg (DE)

(56) Entgegenhaltungen:
- DATABASE WPI Derwent Publications Ltd., London, GB; AN 93-164612[20] & JP-A-5 098 066 (ABE M.) 20. April 1993
- DATABASE WPI Derwent Publications Ltd., London, GB; AN 74-16019V[09] & JP-A-48 019 636 (SAS H.) 12. März 1973
- PATENT ABSTRACTS OF JAPAN vol. 017, no. 420 (C-1093) 5. August 1993 & JP-A-05 086 203 (MITSUBISHI HEAVY IND. LTD.) 6. April 1993

## Beschreibung

Die Erfindung betrifft ein Verfahren zur Aufbereitung von Polyolefinen und Polyolefine enthaltenden Verbundmaterialien zum vollständigen stofflichen Recyclieren der Einzelkomponenten, die ein oder mehrere weitere synthetische Polymere und/oder Metall und/oder natürliche Polymere enthalten.

Kunststoffe und Verbundmaterialien, die ein oder mehrere synthetische Polymere enthalten, insbesondere solche, die aus einem Verbund von unterschiedlichen Materialien (synthetische Polymere, Karton bzw. Papier, Metallfolie) bestehen, sowie Verbunde aus Polyamiden, Polyolefinen mit Textilien und faserartigen Polymeren haben in den vergangenen Jahren einen wesentlichen Marktanteil in den verschiedensten Branchen erobert.

Beispielsweise werden derzeit in Deutschland jährlich über 200 000 Tonnen an unterschiedlichen Verbundverpackungen verbraucht. Wesentliche Vorteile z.B. von Verpackungsverbundmaterialien liegen in ihrer (massebezogen) hohen Aufnahmekapazität sowie in dem von keinem vegleichbaren Material erreichten Konservierungseffekt begründet. Nachteilig ist, daß die genannten Verbunde naturgemäß größtenteils lediglich als Einwegverpackungen genutzt werden können und somit bislang nach einmaligem Gebrauch dem Hausmüll zuzuordnen waren.

Das gleiche betrifft auch Verbunde, die aus synthetischen Polymeren insbesondere Polyolefinen und synthetischen textilen Polymeren bestehen wie zum Beispiel Teppichböden und andere textile Bodenbeläge. Auch diese belasten, allerdings meist nach längerer Nutzungsdauer irgendwann einmal die Mülldeponien.

Im Zusammenhang mit der in den zurückliegenden Jahren aufgrund der stetig anwachsenden Mengen an Müll (insbesondere Hausmüll) und der damit verbundenen Problematik der schadstoffarmen bzw. -freien Beseitigung, die ihre Widerspiegelung in einer verschärften Umweltgesetzgebung findet, ergibt sich zwingend die Notwendigkeit, möglichst wenig Müll zu deponieren bzw. über eine Müllverbrennung zu nutzen, sondern bevorzugt stofflich wiederzuverwerten.

Bei Einstoffmaterialien ist die Wiederverwertung überwiegend realisierbar; dabei muß jedoch meistens ein Wertverlust in Kauf genommen werden. Größere Probleme ergeben sich hingegen beim stofflichen Recycling von Verbundmaterialien. Hier ist der eigentlichen Rückführung in den Stoffkreislauf in jedem Fall ein mehr oder weniger aufwendiger Trennprozeß voran zustellen.

Polyolefine insbesondere Polyethylen werden in den genannten Verpackungs-/Verbundmaterialien vorwiegend als flexibles Verbindungs-, Klebe-, Säureschutz-, Laugenschutz- und Abdichtungsmittel genutzt. Die Rückgewinnung von Polyethylen und die damit verbundene Freisetzung der weiteren Komponenten eines Verbundmaterials, wie Aluminium und textile Fasern, macht diesen Verfahrensschritt beim Geamtrecycling eines Verbundmaterials besonders wichtig.

Ein bisher bekanntes Verfahren zum Recycling von Verpakkungs-/Verbundmaterialien, die aus Cellulose, Polyethylen und Aluminium bestehen, beruht im wesentlichen auf einem Löseverfahren des Polyethylens nach vorhergehender Zerkleinerung des Verbundmaterials.

Bei diesem Verfahren werden die vorher zerkleinerten und aufzubereitenden Verpackungsmaterialien mit einem Lösungsmittel behandelt, das aus aliphatischen, naphthenischen oder aromatischen Kohlenwasserstoffen, deren hydrierte Produkte oder einer Mischung davon besteht. Die Lösungsmittelbehandlung erfolgt, bis der Anteil an Polyethylen gelöst ist. Die Behandlungstemperatur liegt zwischen 0 und 500 °C. Als Lösungsmittel werden insbesondere Siedefraktionen der primären und sekundären Erdölverarbeitung eingesetzt, deren Siedegrenzen im Bereich zwischen 40 und 500 °C liegen. Im Ergebnis des Behandlungsprozesses entsteht ein flüssiges Gemisch aus Kohlenwasserstoffen unterschiedlicher Struktur und Molekülmasse, in denen die nicht löslichen Verpackungsbestandteile dispergiert sind. Diese nicht löslichen Verpackungsbestandteile, wie Cellulosereste und Aluminium, werden von der flüssigen Phase getrennt. Nach der Abtrennung der nichtlöslichen Verpackungsbestandteile erfolgt die Abtrennung des gelösten Polymeranteils aus dem flüssigen Gemisch durch Kühlung und/oder durch Ausfällung mit niederen Alkoholen, wie Methanol, Ethanol oder Propanol.
Dieses Verfahren hat verschiedene Nachteile. Das nach diesem Verfahren zurückgewonnene Polyolefin besitzt einen mehr oder weniger starken Geruch nach den eingesetzten Lösungsmitteln, in diesem Fall überwiegend nach den verwendeten Kohlenwasserstoffen, so daß die Weiterverarbeitungsmöglichkeiten stark eingeschränkt sind. Dieses Problem wäre nur durch mehrere sich anschließende Waschprozesse lösbar, was jedoch das Verfahren verteuern würde.
Hinzu kommt, daß die Verfahrensparameter, wie Druck und Temperatur, bei der Behandlung mit den Lösungsmitteln ökonomisch ungünstig sind.
Weiterhin ist eine Einflußnahme auf die Korngröße des Polyolefins nach diesem Fällungsverfahren nur in geringen Grenzen möglich. Für verschiedene Anwendungen des wiedergewonnenen Polyolefins ist jedoch die Korngröße von erheblicher Bedeutung.

So wird bei der Teppichbodenherstellung eine andere durchschnittliche Korngröße gefordert als bei der Beschichtung von Rohren oder von Pappe.

Nichtzuletzt bringt der Einsatz von zusätzlichen organischen Lösungsmitteln eine Reihe von Problemen sicherheitstechnischer und ökologischer Art mit sich.

Bei einem anderen Verfahren wurde Cyclohexan als Lösungsmittel für Polyolefine erprobt und zur Ausfällung verwendet man Hexan. Obgleich es möglich ist, mit diesem Verfahren unterschiedliche Körnungen zu erzeugen, ist die praktische Durchführung wegen des problematischen MAK-Wertes (180 mg/m3 zum Vergleich Cyclohexan 1050 mg/m3) sehr schwierig und nur unter sehr aufwendigen Arbeitssicherheitsmaßnahmen zu vertreten.

Aus JP-A-48 019 636 ist ein Verfahren zur Aufarbeitung von Polyolefin bekannt. Polypropylen Abfall wird in ein Emulsion umgesetzt. Das Polymer wird mit Hexanvermischt, mechanisch in kleinen Stücken verteilt und danach mit einer Tensid-Lösung dispergiert.

Der Erfindung liegt deshalb die Aufgabe zugrunde ein Verfahren zur Auf- bzw. Umarbeitung von Polyolefingranulaten, -folien oder -platten und von Polyolefinen enthaltenden Verbundmaterialien zu entwickeln, das verfahrenstechnisch unkompliziert und vom Standpunkt der Arbeitssicherheit unproblematisch ist und insbesondere ein Verfahren zur Aufbereitung von Kunststoffen und Verbundmaterialien, die Polyolefine enthalten, anzubieten, mit dem ein qualitativ besseres Polyolefin gewonnen und das Verfahren außerdem ökonomischer und ökologischer durchgeführt werden kann und mit dem gezielt Körnungen in weiten Grenzen hergestellt werden können. Der maximale Gehalt an organischem Lösungsmittel im Reststoff nach der Trocknung soll insbesondere bei Verwendung von Polyethylen-Verbundmaterialien unter 0,1 Gew.-% liegen und die Körnungen sollen optimierte "dry-flow-Eigen schaften" aufweisen.

Die Lösung der Aufgabe erfolgt mit einem Verfahren zur Auf- bzw. Umarbeitung von Polyolefingranulaten, -folien oder - platten und Polyolefine enthaltenden Verbundmaterialien zum nahezu vollständigen stofflichen Recyclieren der Einzelkomponenten, insbesondere der Polyolefine, wobei die Verbundmaterialien ein oder mehrere weitere synthetische Polymene und/oder Metall und/oder natürliche Polymere enthalten können, unter Auflösung eines Polymeranteils in einem Lösungsmittel und Abtrennung nicht löslicher Bestandteile aus der Lösung und der weiteren Aufarbeitung.
Der olefinische Polymeranteil der üblicherweise zerkleinerten Materialien wird durch Behandlung mit einem Lösungsmittel gelöst. Als Lösungsmittel werden erfindungsgemäß Cycloalkane, n-Alkane und Iso-Alkane verwendet, die auch als Mischung eingesetzt werden. Nach dem Abtrennen der unlöslichen Komponenten wird gemäß der Erfindung die Polyolefin-Lösung und eine wässrige Tensid-Lösung ineinander dispergiert.
Die durch diese Behandlung entstehende Dispersion, die aus ausgefälltem Polyolefin, einer wässrigen und einer organischen Phase besteht, wird dann auf an sich bekannte Weise in ihre Bestandteile zerlegt.

Die Erfindung weist eine Reihe von Vorteilen auf.
Mit dem erfindungsgemäßen Verfahren ist es möglich, bei niedrigen Temperaturen und Normaldrücken zu arbeiten. Es kann kontinuierlich in einem Kreisprozeß gefahren werden, so daß keine wesentlichen Mengen an Abprodukten entstehen. Nach dem Ausfällen wird sowohl das Lösungsmittel als auch die wässrige Tensidlösung wiederverwendet.
Die Waschschritte zur Reinigung von gefälltem Polyolefin können verringert werden bzw. entfallen, so daß eine deutliche Verringerung der Kosten des Verfahrens zu erreichen ist. Auf die Verwendung weiterer organischer Lösungsmittel, wie beispielsweise die im Stand der Technik verwendeten niederen Alkohole zur Fällung des Polyolefins, kann verzichtet werden.
Die Korngröße des Polyolefins kann durch die Wahl der Fällungsbedingungen (Temperatur, Konzentration, Tensidgehalte) in weiten Grenzen variiert und damit vielen Anwendungen angepaßt werden.Die Fällung des Polyolefins erfolgt nahezu quantitativ.

Es lassen sich Korngrößen im Bereich von 0,01 bis 8 mm herstellen, wobei die Fällungsprodukte eine sehr glatte Oberfläche aufweisen, die den Partikeln (Körner bzw. Agglomerate) überragende "dry-flow "dry-flow-Eigenschaften" verleiht. So konnte im Vergleich zu herkömmlichen, durch einen Mahlprozeß hergestellte PE-Körnungen eine verbesserte Dry-Flow-Charakteristik (gemessen nach ASTM D 1895/69) erhalten werden.
Bei herkömmlich gemahlenen PE-Körnungen liegen die Werte üblicherweise > 25, bei den erfindungsgemäßen Produkten können Werte unter 20 erzielt werden.

Aus der Gruppe der Cycloalkane werden bevorzugt Cyclopentan, Cyclohexan und Cycloheptan und aus der Gruppe der n-Alkane C₉ bis C₁₆-Fraktionen und aus der Gruppe der Isoalkane C₁₀ bis C₂₅-Fraktionen als Lösungsmittel eingesetzt, wobei ohne weiteres auch höhere oder niedere Cyclo- bzw. n-Alkane Verwendung finden können, wenn die Löslichkeitseigenschaften bestimmter Polyolefin-Chargen dies erfordern.

Die Behandlungstemperatur mit dem Lösungsmittel zur Lösung des Polyolefins beträgt erfindungsgemäß 30 bis 200 °C insbesondere 70 bis 115 °C.
Die Behandlungsdauer mit dem Lösungsmittel, die erfindungsgemäß 5 bis 120 min beträgt, hängt nicht nur von der Behandlungstemperatur sondern auch von der Sortenreinheit des Verpackungs-/Verbundmaterials ab. Sie wird je nach Zustand des Ausgangsmaterials festgelegt und kann auch während des kontinuierlichen Führens des Verfahrens den Erfordernissen angepaßt werden.

Es hat sich gezeigt, daß es für das nahezu quantitative Ausfällen des Polyolefins von Vorteil ist, wenn durch die Behandlung mit dem Lösungsmittel eine Polyolefin-Lösung entsteht, die erfindungsgemäß eine Konzentration von 5 bis 30 Gew.-% Polyolefin aufweist, wobei eine Konzentration von 10 bis 15 Gew.-% Polyolefin für eine ökonomische Fahrweise optimal ist. Die Konzentration kann beispielsweise durch Eindampfen auf den gewünschten Bereich eingestellt werden.

Die erfindungsgemäß verwendeten Tenside sind überwiegend wasserlöslich. Ihre Emulgierwirkung soll im geringen bis mittleren Bereich liegen.
Folgende Tenside werden bevorzugt im Rahmen der Erfindung benutzt:
Anionische Tenside z.B. aus den Gruppen der Alkansulfonate, Alkylbenzolsulfonate, Fettalkoholsulfate wie Dodecylschwefelsäure, Lithiumdodecylsulfat (LDS), Natriumdodecylsulfat (SDS), Tetrabutyl-ammonium-dodecylsulfat, Natriumtetradecylsulfat (STS), Natriumdodecyloxy-(polyethylenglykol)[12])-sulfat (SDS 12 EO), Natrium-di-(2-ethylhexyl)-sulfosuccinat (Aerosol OT, AOT), Natrium-di-(octadecyl)-phosphat, Kaliumper-fluoroctanoat, Natriumdodecanat, Natriumoleat, Triethanolammoniumoleat, Natriumcholat, Natriumdesoxy-cholat, Natriumtaurodesoxycholat;
Kationische Tenside z.B. aus der Gruppe der Alkylammoniumverbindungen wie Hexadecyltrimethylammoniumchlorid (CTAC), Hexadecyltrimethylammoniumbromid (CTAB), Hexadecyltrimethylammoniumhydroxid , Hexadecyltrimethylammoniummethoxid, Tetradecyl-dimethyl-benzyl-ammoniumchlorid (Zephiramin), Hexadecylpyridinium-chlorid(CPC), (CPC), Hexadecylpyridiniumbromid (CPB), 4-tert.-Octylcresoxyethoxyethyl-dimethyl-benzyl-ammoniumchlorid Hyamin 10-X), Hydroxid von 19 a,
Di-(octadecyl)-dimethylammoniumchlorid
   -dimethylammoniumbromid
   -dimethylammoniumhydroxid,
   Dodecylammoniumchlorid, Dodecylammoniumproprionat;
Nichtionische Tenside z.B. 4-tert.-Octylphenyl-(polyethylenglykol-[9/10])-ether, Triton X-100, TX-100, Nonidet P-40, Igepal CO-710, Emulgen 810, 4-tert.-Octylcyclohexyl-(polyethylenglykol[9/10])-ether, Dodecyl-(polyethylenglyko1[42])-ether (Triton N-100), Dodeyl-(polyethylenglyko1[23])-ether (Brij 35), Polyoxyethylen[20]-sorbitan-monooleat (Tween 80), Polyoxyethylen[20]-sorbitan-monolaurat (Tween 20), Polyoxyethylen-polyoxypropylen-Blockcopolymere (Pluronic F-68, MM = 8750, PPO-Gehalt ca. 19%), Digitonin, Octylglucosid, Octyl-thioglucosid, Dodecylmethylsulfoxid;
Amphotere Tenside, insbesondere die als Zwitterionen vorliegenden Tenside vom Betaintyp, wie N-Dodecyl-N,N-dimethylammonio-3-propansulfonat (Sulfobetain SB 12), N,N-Dymethyl-N-(carboxymethyl)-octylammoniumbetain, 3-(3-Cholamidopropyl)dimethylammonio-3-propansulfonat (Chaps), Lecithin (Phospholipid), Lysophosphatidylcholin.

Erfindungsgemäß sollte die wässrige Tensidlösung einen Gesamtgehalt an Tensid von 0,01 bis 15 Gew.-% aufweisen, wobei im Falle des Einsatzes von Tensidmischungen der Anteil der ionischen Tenside mindestens im leichten Überschuß vorliegen sollte. Das Konzentrationsverhältnis der anionischen Tenside zu den nichtionischen Tensiden sollte zum Beispiel 50 zu 1 bis 1 zu 1 betragen. Durch Variation der Tensidkonzentrationen lassen sich die Korngrößen des ausgefällten Polyolefins in weiten Grenzen verändern.
Um die Schaumbildung weitestgehend zu unterdrücken enthält die wässrige Tensid-Lösung zusätzlich an sich bekannte Entschäumer.

In einer weiteren Ausführungsform der Erfindung wird der pH-Wert der wässrigen Tensidlösung auf maximal pH 9 eingestellt. In der Regel wird man einen pH-Wert um den Neutralpunkt herum wählen. Die Wahl der Höhe des pH-Wertes hängt im wesentlichen von der Zusammensetzung des Verpackungs-/Verbundmaterials ab. Liegt ein Verbundmaterial vor, das aus Cellulose, Polyethylen und Aluminium besteht, ist es wichtig, den pH-Wert um den Neutralpunkt herum zu halten. Höhere pH-Werte bzw. niedrigere pH-Werte unterhalb von pH=6 können beim kontinuierlichen Führen des Recyclierungsprozesses zu einer Auflösung des Aluminiums führen und dadurch an verschiedenen Stellen des Verfahrens Störungen verursachen. Deshalb ist es zweckmäßig, den pH-Wert der wässrigen Tensid-lösung unter Verwendung von Puffersubstanzen, wie z.B. Borax, um den Neutralpunkt zu stabilisieren.

Erfindungsgemäß wird Polyethylen beim Dispergieren der organischen Phase Polyethylenlösung und der wässrigen Phase Tensidlösung ausgefällt. Hierbei ist zu beachten, daß beim Dispergieren das Volumenverhältnis der beiden miteinander zu dispergierenden Phasen vorzugsweise einen Überschuß an wässriger Phase aufweist. Erst unter diesen Bedingungen ist eine nahezu quantitative Ausfällung des Polyethylens möglich.

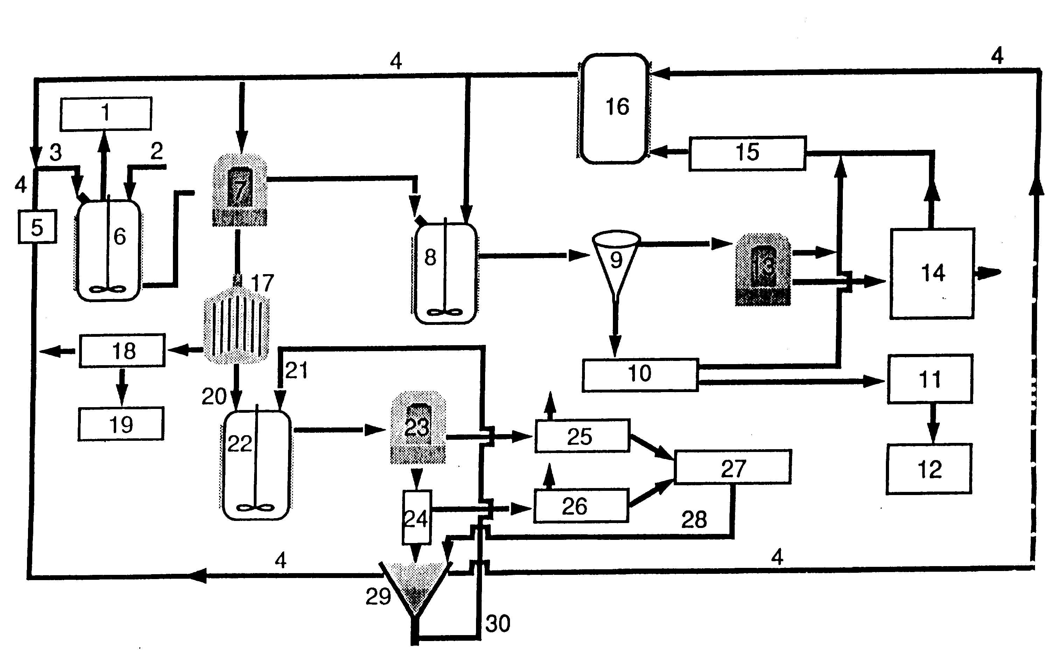

Figur 1 zeigt den technologischen Ablauf des erfindungsgemäßen Verfahrens.
Unter Bezugnahme auf die Figur 1 wird der technologische Ablauf des Verfahrens in den folgenden Ausführungen beispielhaft an der Aufarbeitung von Al/PE-Verbunden (Rejects) beschrieben:
Die Rejects, zerkleinerte Aluminium-Polyethylen-Verbunde mit noch eventuellen Anteilen an Cellulose, werden über eine Rejects-Zuführung 2 in eine Lösestufe 6 eingeführt. Gleichzeitig erfolgt die Zuführung von Cyclohexan über eine Lösungsmittelzuführung 3. Das über einen Lösungsmittelkreislauf 4 zugeführte Cyclohexan wird im Wärmetauscher 5 auf 75 °C erhitzt. Auftretende Lösungsmitteldämpfe werden über eine Absauganlage 1 beseitigt. Der Lösungsprozess dauert etwa 5 bis 60 Minuten, bis das Polyethylen nahezu vollständig in Lösung gebracht ist. Die Dauer hängt neben der Temperatur des Lösungsmittels von der Rührergeschwindigkeit, von der Größe der Rejectsteile und von der Art des Polyethylens ab. Die Polyethylen-Cyclohexan-Lösung wird in eine Trennstufe (fest-flüssig) 7 überführt. Die abgetrennten festen Bestand- teile werden anschließend in eine Waschstufe 8 überführt, in der über den Lösungsmittelkreislauf 4 Cyclohexan als Waschflüssigkeit zugeführt wird. Eine hydromechanische Trennstufe 9 trennt die Aluminiumteilchen von restlichen im wesentlichen ungelösten Cellulosebestandteilen ab. Das abgetrennte Aluminium wird einem Feststofftrockner 10 zugeführt und wandert von dort in eine Presse 11 bzw. weiter in einen Schmelzofen 12 zur Weiterverarbeitung des Aluminiums. In einer Trennstufe (fest-flüssig) 13 erfolgt die weitere Abtrennung fester Bestandteile wie Cellulose- und andere Polymerteilchen. In einem Trockner 14 werden diese Teilchen von ihrem Lösungsmittel befreit, das dann anschließend wieder in den Lösungsmittelkreislauf 4 zurückgeführt wird. Die aus dem Feststofftrockner 10 kommenden Lösungsmitteldämpfe werden in einen Kondensator 15 überführt und von dort gemeinsam mit weiterem recykliertem Cyclohexan einem Vorratsbehälter für Lösungsmittel 16 zugeführt. In einer Feintrennstufe (fest-flüssig) 17 erfolgt die Abtrennung der Polyethylenlösung von weiteren kolloidal gelösten Bestandteilen oder von Bestandteilen geringerer Teilchengröße, die in der Trennstufe (fest-flüssig) 7 nicht abgetrennt wurden, wie Farbstoffe, Haftvermittler, Additive, Stabilisatoren. Diese unerwünschten Bestandteile werden einer Trockenstufe 18 zugeführt und getrocknet und in einem Restfeststoffsammler 19 gesammelt. Das abgetrennte Cyclohexan wird wiederum dem Lösungsmittelkreislauf 4 zugeführt. Über eine Produktlösungszuführung 20 wird die Polyethylenlösung in einen Dispergator 22 eingebracht, in dem bereits die wässrige Tensidlösung über eine Tensidlösungszuführung 21 vorgelegt worden ist. Während des Dispergierens fällt Polyethylen aus und wird in die Grobtrennstufe (fest-flüssig) 23 befördert.

Das in der Grobtrennstufe (fest-flüssig) 23 und in einer sich anschließenden Feintrennstufe (fest-flüssig) 24 abgetrennte Polyethylen wird einem Trockner (grob) 25 und einem Trockner (fein) 26 zugeführt. Das in einem Kondensator 27 anfallende Gemisch aus wässriger Tensidlösung und organischem Lösungsmittel wird über eine Leitung 28 einer Trennstufe (flüssig-flüssig) 29 zugeführt. In dieser Trennstufe (flüssig-flüssig) 29 erfolgt eine Trennung der organischen Lösungsmittelphase von der wässrigen Tensidphase. Beide Phasen werden über den Kreislauf 4 bzw. über eine Leitung 30 einer weiteren Verwendung zugeführt.

Die Erfindung wird bezüglich der Ausfällbedingungen des Polyolefins an den folgenden Ausführungsbeispielen näher erläutert.

### Beispiel 1

60 g einer Cyclohexan-Polyethylen-Lösung (hergestellt aus LDPE-Folie) wurden auf 72 °C erhitzt und in einen Dispergator gegeben, der 120 g einer wässrigen Lösung von 0,025-prozentigen Alkansulfonat AS 30 (30 % an Natriumalkansulfonat) enthielt. Die wässrige Tensidlösung hatte dabei eine Temperatur von 60 °C. Während des Dispergierens wurde ein Teil des Cyclohexans verdampft und es stellte sich eine Temperatur von 30°C im Dispergator ein. Die Dispergierzeit betrug 16 Minuten. Das unter diesen Bedingungen ausgefällte Polyethylen wurde abfiltriert und mit entionisiertem Wasser gewaschen und bei 65 °C getrocknet.
Es entstanden überwiegend Polyethylenkügelchen mit einer Korngröße von 2 bis 8 mm.

### Beispiel 2

60 g einer Cyclohexan-Polyethylen-Lösung wurden auf 72 °C erhitzt und einen Dispergator gegeben, der 120 g einer wässrigen Lösung von 0,1 prozentigen Alkansulfonat AS 30 (30 % an Natriumalkansulfonat) enthielt. Die wässrige Tensidlösung hatte dabei eine Temperatur von 60 °C. Während des Dispergierens wurde ein Teil des Cyclohexans verdampft und es stellte sich eine Temperatur von 30°C im Dispergator ein. Die Dispergierzeit betrug 16 Minuten. Das unter diesen Bedingungen ausgefällte Polyethylen wurde abfiltriert und mit entionisiertem Wasser gewaschen und bei 65 °C getrocknet. Es entstanden überwiegend Polyethylenkügelchen mit einer Korngröße von 0,5 bis 2 mm.

### Beispiel 3

60 g einer Cyclohexan-Polyethylen-Lösung wurden auf 72 °C erhitzt und einen Dispergator gegeben, der 120 g einer wässrigen Lösung von 0,25 prozentigen Alkansulfonat AS 30 (30 % an Natriumalkansulfonat) enthielt. Die wässrige Tensidlösung hatte dabei eine Temperatur von 60 °C. Während des Dispergierens wurde ein Teil des Cyclohexans verdampft und es stellte sich eine Temperatur von 30°C im Dispergator ein. Die Dispergierzeit betrug 16 Minuten. Das unter diesen Bedingungen ausgefällte Polyethylen wurde abfiltriert und mit entionisiertem Wasser gewaschen und bei 65 °C getrocknet. Es entstanden überwiegend Polyethylenkügelchen mit einer Korngröße von 0,1 bis 0,8 mm. Diese Beispiele zeigen, wie man gezielt Körnungen zwischen 0,1 bis 8 mm nach dem erfindungsgemäßen Verfahren herstellen kann.

### Beispiel 4 (Vergleichsbeispiel)

60 g einer Cyclohexan-Polyethylen-Lösung wurden auf 72 °C erhitzt und einen Dispergator gegeben, der 120 g einer Hexan-Heptan-Lösung enthielt. Die Hexan-Heptan-Lösung hatte dabei eine Temperatur von 60 °C. Während des Dispergierens wurde ein Teil des Cyclohexans/Hexangemisches verdampft und es stellte sich eine Temperatur von 30°C im Dispergator ein. Die Dispergierzeit betrug 16 Minuten. Das unter diesen Bedingungen ausgefällte Polyethylen wurde abfiltriert und mit Hexan-Heptan-Lösung gewaschen und bei 65 °C getrocknet.

Es entstanden überwiegend Polyethylenkügelchen mit einer Korngröße von 0,1 bis 0,2 mm, deren Dry-Flow-Charakteristik deutlich schlechter war, wobei Werte von über 35 nach ASTM D 1895/69 gemessen werden.

## Patentansprüche

1. Verfahren zur Auf- bzw. Umarbeitung von Polyolefingranulaten, -folien oder -platten und Polyolefine enthaltenden Verbundmaterialien zum nahezu vollständigen stofflichen Recyclieren der Einzelkomponenten, insbesondere der Polyolefine, wobei die Verbundmaterialien ein oder mehrere weitere synthetische Polymere und/oder Metall und/oder natürliche Polymere enthalten können, unter Auflösung eines Polymeranteils in einem Lösungsmittel und Abtrennung nicht löslicher Bestandteile aus der Lösung und der weiteren Aufarbeitung,
dadurch gekennzeichnet,
daß die olefinische Polymere durch Behandlung mit einem Lösungsmittel, das aus Cycloalkanen, n-Alkanen oder Isoalkanen oder aus einem Gemisch von diesen besteht, gelöst werden,
daß nach dem Abtrennen der unlöslichen Komponenten die Polyolefin-Lösung und eine wässrige Tensid-Lösung ineinander dispergiert werden
und daß die Bestandteile der entstandenen, aus einer organischen und wässrigen Phase und dem ausgefällten Polyolefin bestehenden Dispersion von einander getrennt werden
und daß durch Veränderung der Temperatur, der Konzentration des Lösungsmittels und des Tensids gezielte Körnungen, Mikrogranulate und Granulate in einem Korngrößenbereich von 0,01 bis 8 mm hergestellt werden können.

2. Verfahren nach Anspruch 1,
dadurch gekennzeichnet,
daß als Cycloalkane Cyclopentan und/oder Cyclohexan und/oder Cycloheptan eingesetzt werden.

3. Verfahren nach Anspruch 1,
dadurch gekennzeichnet,
daß als n-Alkane C₉- bis C₁₆ Fraktionen und als Isoalkane C₁₀- bis C₂₅-Fraktionen eingesetzt werden.

4. Verfahren nach einem der Ansprüche 1 bis 3,
dadurch gekennzeichnet,
daß die Behandlungstemperatur mit dem Lösungsmittel 30 bis 200 °C beträgt.

5. Verfahren nach einem der Ansprüche 1 bis 4,
dadurch gekennzeichnet,
daß die Behandlungstemperatur mit dem Lösungsmittel 70 bis 115 °C beträgt.

6. Verfahren nach einem der Ansprüche 1 bis 5,
dadurch gekennzeichnet,
daß die Behandlungsdauer mit dem Lösungsmittel 5 bis 120 min beträgt.

7. Verfahren nach einem der Ansprüche 1 bis 6,
dadurch gekennzeichnet,
daß durch Behandlung mit dem Lösungsmittel eine Polyolefin-Lösung hergestellt wird, die eine Konzentration von 5 bis 30 Gew.-% Polyolefin aufweist.

8. Verfahren nach einem der Ansprüche 1 bis 7,
dadurch gekennzeichnet,
daß durch Behandlung mit dem Lösungsmittel eine Polyolefin-Lösung hergestellt wird, die eine Konzentration von 8 bis 15 Gew.-% Polyolefin aufweist.

9. Verfahren nach einem der Ansprüche 1 bis 8,
dadurch gekennzeichnet,
daß die wässrige Tensidlösung 0,01 bis 15 Gew.-% anionische und/oder nichtionische Tenside und/oder kationische Tenside und/oder amphotere Tenside enthält.

10. Verfahren nach einem der Ansprüche 1 bis 9,
dadurch gekennzeichnet,
daß das Konzentrationsverhältnis der anionischen Tenside zu den nichtionischen Tensiden 50 zu 0,01 bis 1 zu 1 beträgt.

11. Verfahren nach einem der Ansprüche 1 bis 10,
dadurch gekennzeichnet,
daß die wässrige Tensid-Lösung Entschäumer enthält.

12. Verfahren nach einem der Ansprüche 1 bis 11,
dadurch gekennzeichnet,
daß der pH-Wert der wässrigen Tensid-Lösung nicht größer als 9 ist.

13. Verfahren nach einem der Ansprüche 1 bis 12,
dadurch gekennzeichnet,
daß der pH-Wert der wässrigen Tensid-Lösung mit Puffersubstanzen konstant gehalten wird.

14. Verfahren nach einem der Ansprüche 1 bis 13,
dadurch gekennzeichnet,
daß die wässrige Tensid-Lösung 0,01 bis 20 Gew.-% Elektrolyte enthält.

15. Verfahren nach Anspruch 14,
dadurch gekennzeichnet,
daß die wässrige Tensid-Lösung ein- und/oder zwei- und/oder dreiwertige Kationen enthält.

16. Verfahren nach einem der Ansprüche 1 bis 15,
dadurch gekennzeichnet,
daß die wässrige Tensidlösung 0,1 - 0,3 Gew.-% anionische und/oder nichtionische Tenside enthält.

17. Verfahren nach einem der Ansprüche 1 bis 16,
dadurch gekennzeichnet,
daß die Temperatur beim Dispergieren der Tensid-Lösung in die Polyolefin-Lösung 20 bis 110 °C beträgt.

18. Verfahren nach einem der Ansprüche 1 bis 17,
dadurch gekennzeichnet,
daß die Temperatur beim Dispergieren der Tensid-Lösung in die Polyolefin-Lösung 40 bis 50 °C beträgt.

19. Verfahren nach einem der Ansprüche 1 bis 18,
dadurch gekennzeichnet,
daß die Temperatur der Dispersion während des Ausfällens des Polyolefins unter 30 °C abgesenkt wird.

20. Verfahren nach einem der Ansprüche 1 bis 19,
dadurch gekennzeichnet,
daß das Volumenverhältnis von Polyolefin-Lösung und Tensid-Lösung vor der Dispergierung 2 zu 1 bis 1 zu 10 beträgt.

21. Verfahren nach einem der Ansprüche 1 bis 20,
dadurch gekennzeichnet,
daß bei einer Temperatur zwischen 30 und 60°C, einer Polyolefinkonzentration von 5-30 Gew.-% und einer Tensidkonzentration von 0,025 % eine Korngröße von 2 bis 8 mm der Polyethylenkügelchen erhalten wird.

22. Verfahren nach einem der Ansprüche 1 bis 21,
dadurch gekennzeichnet,
daß bei einer Temperatur zwischen 30 und 60°C, einer Polyolefinkonzentration von 5-30 Gew.-% und einer Tensidkonzentration von 0,1% eine Korngröße von 0,5 bis 2 mm der Polyethylenkügelchen erhalten wird.

23. Verfahren nach einem der Ansprüche 1 bis 22,
dadurch gekennzeichnet,
daß bei einer Temperatur zwischen 30 und 60°C, einer Polyolefinkonzentration von 5-30 Gew.-% und einer Tensidkonzentration von 0,25 % eine Korngröße von 0,1 bis 0,8 mm erhalten wird.

## Claims

1. Process for the reprocessing or reworking of polyolefin granulates, foils or sheets and of composite materials containing polyolefins with a view to virtually complete material recycling of the individual components, in particular of the polyolefins, whereby the composite materials may contain one or more additional synthetic polymers and/or metal and/or natural polymers, by dissolution of a polymer portion in a solvent and separation of non-soluble constituents from the solution and by further reprocessing,
characterised in that
the olefinic polymers are dissolved by treatment with a solvent consisting of cycloalkanes, n-alkanes or isoalkanes or a mixture of these,
in that the polyolefin solution and an aqueous surfactant solution are dispersed in one another after separation of the insoluble components
and in that the constituents of the dispersion that has been formed, consisting of an organic phase, an aqueous phase and the precipitated polyolefin, are separated from one another and in that by changing the temperature, the concentration of the solvent and the concentration of the surfactant, selective-granulations, microgranulates and granulates can be produced in a grain-size range from 0.01 to 8 mm.

2. Process according to Claim 1,
characterised in that
cyclopentane and/or cyclohexane and/or cycloheptane are employed by way of cycloalkanes.

3. Process according to Claim 1,
characterised in that
C₉ to C₁₆ fractions are employed by way of n-alkanes and C₁₀ to C₂₅ fractions are employed by way of isoalkanes.

4. Process according to one of Claims 1 to 3,
characterised in that
the temperature of treatment with the solvent amounts to between 30 and 200 °C.

5. Process according to one of Claims 1 to 4,
characterised in that
the temperature of treatment with the solvent amounts to between 70 and 115 °C.

6. Process according to one of Claims 1 to 5,
characterised in that
the duration of treatment with the solvent amounts to between 5 and 120 min.

7. Process according to one of Claims 1 to 6,
characterised in that
by treatment with the solvent a polyolefin solution is produced having a concentration of between 5 and 30 wt-% polyolefin.

8. Process according to one of Claims 1 to 7,
characterised in that
by treatment with the solvent a polyolefin solution is produced having a concentration of between 8 and 15 wt-% polyolefin.

9. Process according to one of Claims 1 to 8,
characterised in that
the aqueous surfactant solution contains between 0.01 and 15 wt-% anionic and/or non-ionic surfactants and/or cationic surfactants and/or amphoteric surfactants.

10. Process according to one of Claims 1 to 9,
characterised in that
the concentration ratio of the anionic surfactants to the non-ionic surfactants amounts to between 50 to 0.01 and 1 to 1.

11. Process according to one of Claims 1 to 10,
characterised in that
the aqueous surfactant solution contains defoamers.

12. Process according to one of Claims 1 to 11,
characterised in that
the pH value of the aqueous surfactant solution is not greater than 9.

13. Process according to one of Claims 1 to 12,
characterised in that
the pH value of the aqueous surfactant solution is kept constant with buffering substances.

14. Process according to one of Claims 1 to 13,
characterised in that
the aqueous surfactant solution contains between 0.01 and 20 wt-% electrolytes.

15. Process according to Claim 14,
characterised in that
the aqueous surfactant solution contains monovalent and/or divalent and/or trivalent cations.

16. Process according to one of Claims 1 to 15,
characterised in that
the aqueous surfactant solution contains 0.1 - 0.3 wt-% anionic and/or non-ionic surfactants.

17. Process according to one of Claims 1 to 16,
characterised in that
the temperature in the course of dispersing the surfactant solution in the polyolefin solution amounts to between 20 and 110 °C.

18. Process according to one of Claims 1 to 17,
characterised in that
the temperature in the course of dispersing the surfactant solution in the polyolefin solution amounts to between 40 and 50 °C.

19. Process according to one of Claims 1 to 18,
characterised in that
the temperature of the dispersion during precipitation of the polyolefin is lowered to below 30 °C.

20. Process according to one of Claims 1 to 19,
characterised in that
the volume ratio of polyolefin solution to surfactant solution prior to dispersion amounts to between 2 to 1 and 1 to 10.

21. Process according to one of Claims 1 to 20,
characterised in that
at a temperature between 30 and 60 °C, with a polyolefin concentration of 5-30 wt-% and a surfactant concentration of 0.025 %, a grain size of the polyethylene globules amounting to between 2 and 8 mm is obtained.

22. Process according to one of Claims 1 to 21,
characterised in that
at a temperature between 30 and 60 °C, with a polyolefin concentration of 5-30 wt-% and a surfactant concentration of 0.1 %, a grain size of the polyethylene globules amounting to between 0.5 and 2 mm is obtained.

23. Process according to one of Claims 1 to 22,
characterised in that
at a temperature between 30 and 60 °C, with a polyolefin concentration of 5-30 wt-% and a surfactant concentration of 0.25 %, a grain size amounting to between 0.1 and 0.8 mm is obtained.

## Revendications

1. Procédé de traitement ou de transformation de granulés, de films ou de plaques de polyoléfine et de matériaux composites contenant des polyoléfines pour obtenir un recyclage des matières presque total des composants individuels, notamment des polyoléfines, où les matériaux composites peuvent contenir un ou plusieurs autres polymères synthétiques et/ou du métal et/ou des polymères naturels, par dissolution d'une partie du polymère dans un solvant et séparation des composants non solubles à partir de la solution et en outre traitement,
caractérisé en ce que,
on dissout les polymères oléfiniques par traitement avec un solvant qui est constitué de cycloalcanes, n-alcanes, ou isoalcanes, ou d'un mélange de ces solvants, qu'après la séparation des composants insolubles, on disperse l'une dans l'autre la solution de polyoléfine et une solution aqueuse de tensio-actif et qu'on sépare les composants de la dispersion formée, constituée d'une phase organique et d'une phase aqueuse et de la polyoléfine précipitée,
et que par modification de la température, de la concentration du solvant et du tensio-actif, on peut préparer des granulométries appropriées, des microgranulés et des granulés dans un intervalle de granulométrie de 0,01 à 8 mm.

2. Procédé selon la revendication 1,
caractérisé en ce qu'
on utilise comme cycloalcanes du cyclopentane et/ou du cyclohexane, et/ou du cycloheptane.

3. Procédé selon la revendication 1,
caractérisé en ce qu'
on utilise comme n-alcanes des fractions C₉ à C₁₆, et comme isoalcanes des fractions C₁₀ à C₂₅.

4. Procédé selon l'une des revendications 1 à 3,
caractérisé en ce que
la température de traitement avec le solvant est de 30 à 200°C.

5. Procédé selon l'une des revendications 1 à 4,
caractérisé en ce que
la température de traitement avec le solvant est de 70 à 115°C.

6. Procédé selon l'une des revendications 1 à 5,
caractérisé en ce que
la durée de traitement avec le solvant est de 5 à 120 minutes.

7. Procédé selon l'une des revendications 1 à 6,
caractérisé en ce que
par traitement avec le solvant, on produit une solution de polyoléfine qui présente une concentration de 5 à 30% en poids de polyoléfine.

8. Procédé selon l'une des revendications 1 à 7,
caractérisé en ce que
par traitement avec le solvant, on prépare une solution de polyoléfine qui présente une concentration de 8 à 15% en poids de polyoléfine.

9. Procédé selon l'une des revendications 1 à 8,
caractérisé en ce que
la solution aqueuse de tensio-actif contient 0,01 à 15% en poids de tensio-actifs anioniques et/ou non ioniques, et/ou de tensio-actifs cationiques, et/ou de tensio-actifs amphotères.

10. Procédé selon l'une des revendications 1 à 9,
caractérisé en ce que
le rapport de concentration des tensio-actifs anioniques aux tensio-actifs non ioniques représente 50 à 0,01 jusqu'à 1 pour 1.

11. Procédé selon l'une des revendications 1 à 10,
caractérisé en ce que
la solution aqueuse de tensio-actif contient un agent anti-mousse.

12. Procédé selon l'une des revendications 1 à 11,
caractérisé en ce que
le pH de la solution aqueuse de tensio-actif ne dépasse pas 9.

13. Procédé selon l'une des revendications 1 à 12,
caractérisé en ce qu'
on maintient constant le pH de la solution aqueuse de tensio-actif avec des substances tampons.

14. Procédé selon l'une des revendications 1 à 13,
caractérisé en ce que
la solution aqueuse de tensio-actif contient 0,01 à 20% en poids d'électrolytes.

15. Procédé selon la revendication 14,
caractérisé en ce que
la solution aqueuse de tensio-actif contient des cations monovalents et/ou bivalents, et/ou trivalents.

16. Procédé selon l'une des revendications 1 à 15,
caractérisé en ce que
la solution aqueuse de tensio-actif contient 0,1 à 0,3% en poids de tensio-actifs anioniques et/ou non ioniques.

17. Procédé selon l'une des revendications 1 à 16,
caractérisé en ce que
la température lors de la dispersion de la solution de tensio-actif dans la solution de polyoléfine est de 20 à 110°C.

18. Procédé selon l'une des revendications 1 à 17,
caractérisé en ce que
la température lors de la dispersion de la solution de tensio-actif dans la solution de polyoléfine est de 40 à 50°C.

19. Procédé selon l'une des revendications 1 à 18,
caractérisé en ce qu'
on diminue la température de la dispersion pendant la précipitation de la polyoléfine en dessous de 30°C.

20. Procédé selon l'une des revendications 1 à 19,
caractérisé en ce que
le rapport volumique de la solution de polyoléfine et de la solution de tensio-actif avant la dispersion est de 2 pour 1 jusqu'à 1 pour 10.

21. Procédé selon l'une des revendications 1 à 20,
caractérisé en ce que
pour une température comprise entre 30 et 60°C, une concentration en polyoléfine de 5 - 30% en poids et une concentration de tensio-actif de 0,025%, on obtient une granulométrie de 2 à 8 mm des petites billes de polyéthylène.

22. Procédé selon l'une des revendications 1 à 21,
caractérisé en ce que
pour une température comprise entre 30 et 60°C, une concentration en polyoléfine de 5 - 30% en poids et une concentration en tensio-actif de 0,1%, on obtient une granulométrie de 0,5 à 2 mm des petites billes de polyéthylène.

23. Procédé selon l'une des revendications 1 à 22,
caractérisé en ce que
pour une température comprise entre 30 et 60°C, une concentration en polyoléfine de 5 - 30% en poids, et une concentration en tensio-actif de 0,25%, on obtient une granulométrie de 0,1 à 0,8 mm.
